**Europäisches Patentamt**

**European Patent Office**

**Office européen des brevets**

(19)

(11) Veröffentlichungsnummer : **0 090 230**
**B1**

# (12) EUROPÄISCHE PATENTSCHRIFT

(45) Veröffentlichungstag der Patentschrift :
28.05.86

(21) Anmeldenummer : 83102446.8

(22) Anmeldetag : 12.03.83

(51) Int. Cl.⁴ : **B 01 D   3/18**

(54) **Vorrichtung zur Verbesserung der Destillation und Rektifikation in Destillationskolonnen.**

(30) Priorität : 13.03.82 DE 3209265

(43) Veröffentlichungstag der Anmeldung :
05.10.83 Patentblatt 83/40

(45) Bekanntmachung des Hinweises auf die Patenterteilung : 28.05.86 Patentblatt 86/22

(84) Benannte Vertragsstaaten :
BE DE FR GB NL

(56) Entgegenhaltungen :
DE-B- 1 442 825
FR-A-   737 315
US-A- 3 017 950
US-A- 3 729 179

(73) Patentinhaber : **Union Rheinische Braunkohlen Kraftstoff Aktiengesellschaft**
**Ludwigshafener Strasse o. Nr. Postfach 8**
**D-5047 Wesseling (DE)**

(72) Erfinder : **Cos, Marino, Dr.**
**Roentgenstrasse 3**
**D-5047 Wesseling (DE)**

# 0 090 230

**Beschreibung**

Die Erfindung betrifft eine Vorrichtung zur Verbesserung des Destillations- und Rektifikationsvorgangs in Destillationskolonnen, bestehend aus Einbauten auf den Destillationsböden im Bereich der stagnanten Zonen in Form segmentartiger Einbauten in Anpassung an die Belastung.

In Destillations- bzw. Rektifikationskolonnen muß ein möglichst optimaler Kontakt zwischen Dampf und Flüssigkeit vorliegen. Hierzu dienen Glocken-, Teller-, Siebböden und andere.

Schwerwiegende Nachteile bei Destillations- und Rektifikationsvorgängen, sowohl hinsichtlich der Energie- kosten durch übermäßige thermische Beanspruchung, als auch hinsichtlich Destillatverlusten durch schlechte Produkttrennung, ferner Schwierigkeiten beim Anfahren können dadurch auftreten, daß an den einzelnen Böden insbesondere in den stagnanten Zonen, Durchregnen bzw. Kanalbildung eintritt, ohne ausreichenden Austausch der durchregnenden Flüssigkeit mit aufsteigendem Dampf, während in anderen Bereichen ein Mangel an nach unten fließender Flüssigkeit eintritt, wodurch ebenfalls schlechte Produkttrennung sowie Produktzersetzung und Verschmutzung in diesem Bereich auftreten können.

Dies gilt insbesondere für den Bereich oberhalb der « Flash »-Zone, der auch Waschzone genannt wird, nämlich oberhalb des Kolonnenabschnitts, in dem die Einsatz-Produktgemischeinspritzung erfolgt, sowie für Abzugsböden und Seitenstripper.

Die Auswirkungen der stagnanten Zonen sind insbesondere dann zu beobachten, wobei zusätzliche Energiekosten von mehr als 10 % in atmosphärischen Kolonnen und bis 20 % und darüber in Vakuumkolonnen auftreten können, wenn Kolonnen bei Teillast betrieben werden.

Es sind daher zahlreiche Untersuchungen bekannt, in denen die Blasenbildung an den Bodenöffnungen, die Flüssigkeitshöhe auf den Böden, die Anordnung der Bodenöffnungen, Größe der Bodenöffnungen und andere Parameter untersucht worden sind (z. B. I. Stichlmair : Die Grundlagen des Gas-Flüssigkontakt-Apparates Bodenkolonne, Verlag Chemie GmbH., Weinheim 1978 ; M. Molzahn u. D. Wolf, Chem.- Ing.- Tech. *53* (1981) Nr. 10, 768-780).

Es ist bemerkenswert, daß zwar bekannt ist, daß die sogenannten stagnanten Zonen eines Bodens, nämlich die Zonen links und rechts des Zulauf- und Ablaufwehrs, Bodenbereiche sind, die das Durchregnen begünstigen, daß jedoch keine technisch brauchbaren Lösungen vorliegen, die diesen Effekt wirkungsvoll verhindern.

Es ist zwar bekannt, durch Leitbleche an den Innenwandungen der Kolonnen die Wirkung des stagnanten Zonenbereichs zu verringern, es ist ferner bekannt, für den Bereich geringen Rückflusses in einer Kolonne die dort vorhandenen Böden parallel zum Ablaufwehr zu verkleinern (Blanking-Methode), eine Beseitigung der stagnanten Zonen und damit eine befriedigende Eindämmung der genannten Nachteile konnte jedoch durch diese Maßnahmen nicht erreicht werden.

Aufgabe der vorliegenden Erfindung ist es daher, den Wirkungsgrad einer Destillations- bzw. Rektifikationskolonne weiter zu verbessern. Die Aufgabe wird dadurch gelöst, daß die Einbauten aus Segmenten bestehen, welche die stagnanten Zonen in Anpassung an die Belastung abdecken.

Zur Verdeutlichung der Erfindung dienen die folgenden Figuren :

Figur 1   zeigt einen einflutigen Destillationsboden. Die schraffierten Flächen sind stagnante Zonen.

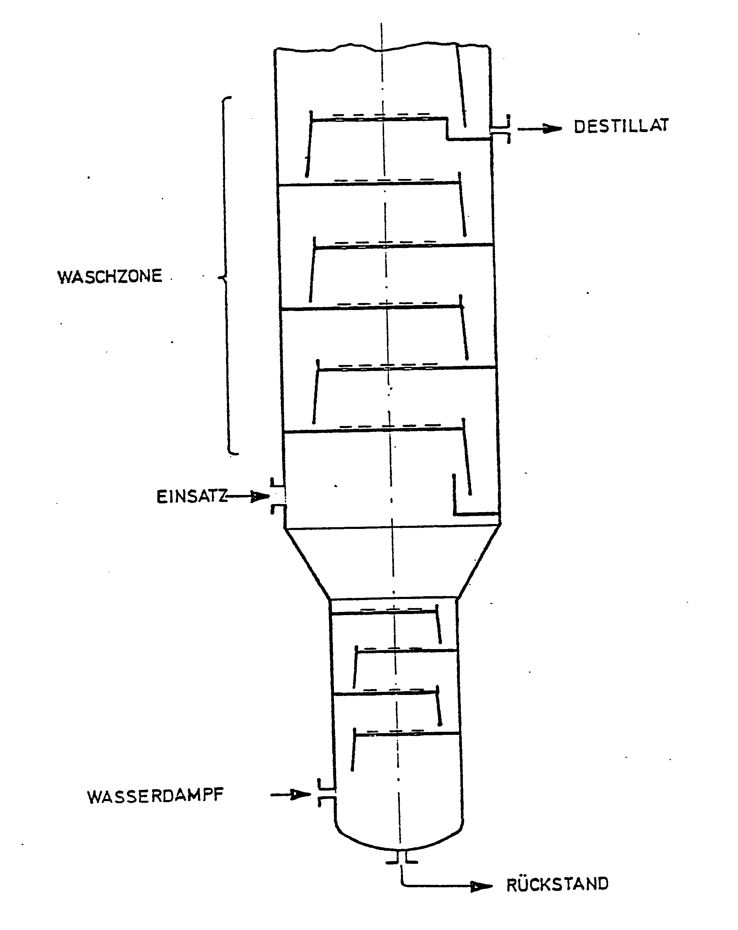

Figur 2   zeigt die Waschzone einer Destillationskolonne, wie sie in der Mineralöltechnik verwendet wird.

Figuren 3 und 4   zeigen die erfindungsgemäße Abdeckung der stagnanten Zonen durch eingebaute gleich große Segmente.

Figur 5   zeigt einen mit ungleichen Einbauten abgedeckten Destillationsboden.

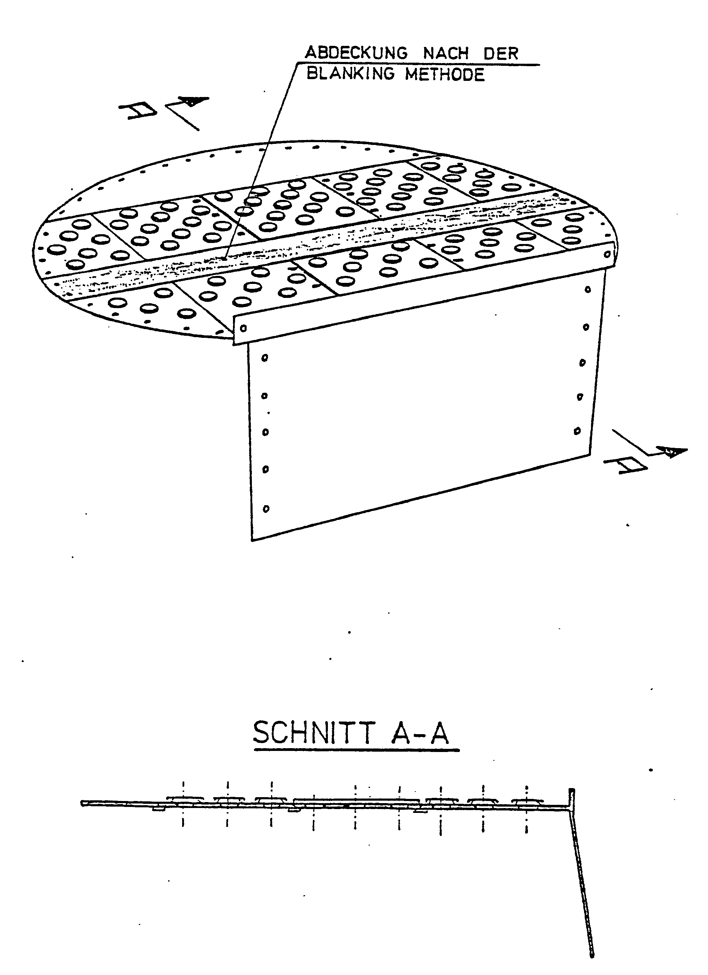

Figur 6   zeigt einen nach der bekannten Blanking-Methode veränderten Boden.

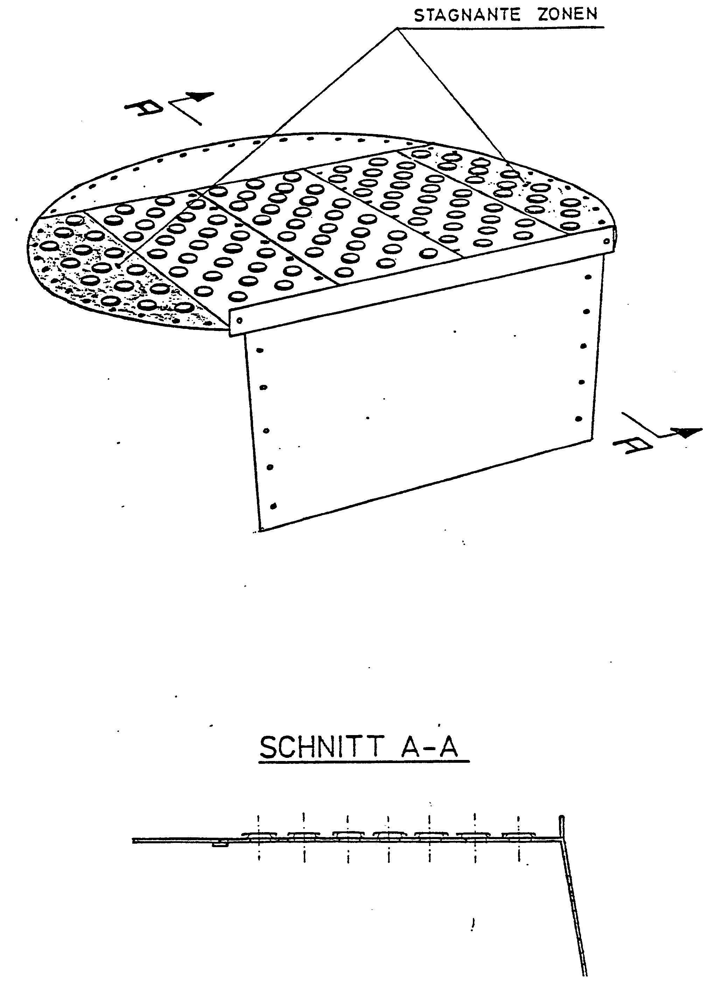

Fig. 1 zeigt, daß an den Randzonen eines Bodens ein Bereich vorliegt, an dem bevorzugt Durchregnen erfolgt (stagnante Zonen).

In diesem Gebiet findet daher kein normaler Austausch zwischen Dampf und Flüssigkeit statt. Dies hat zur Folge, daß auch im zentralen Bereich des Bodens keine optimale Wechselwirkung stattfindet. Es kann sogar im letzteren Bereich durch Mangel an herabfließender Flüssigkeit Verschmutzung durch Produktzersetzung eintreten.

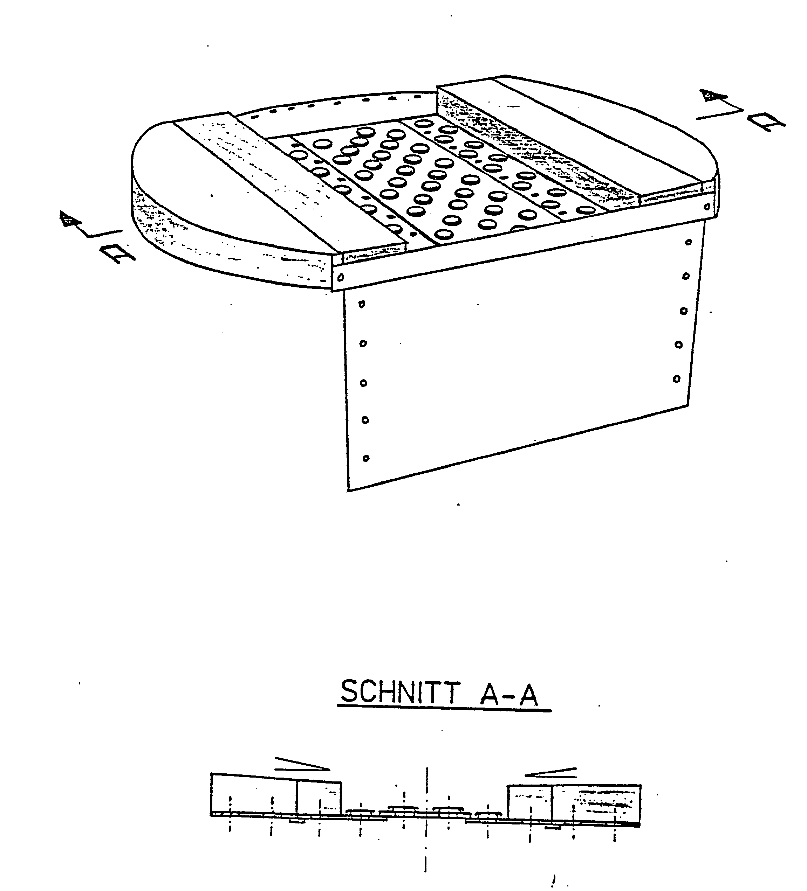

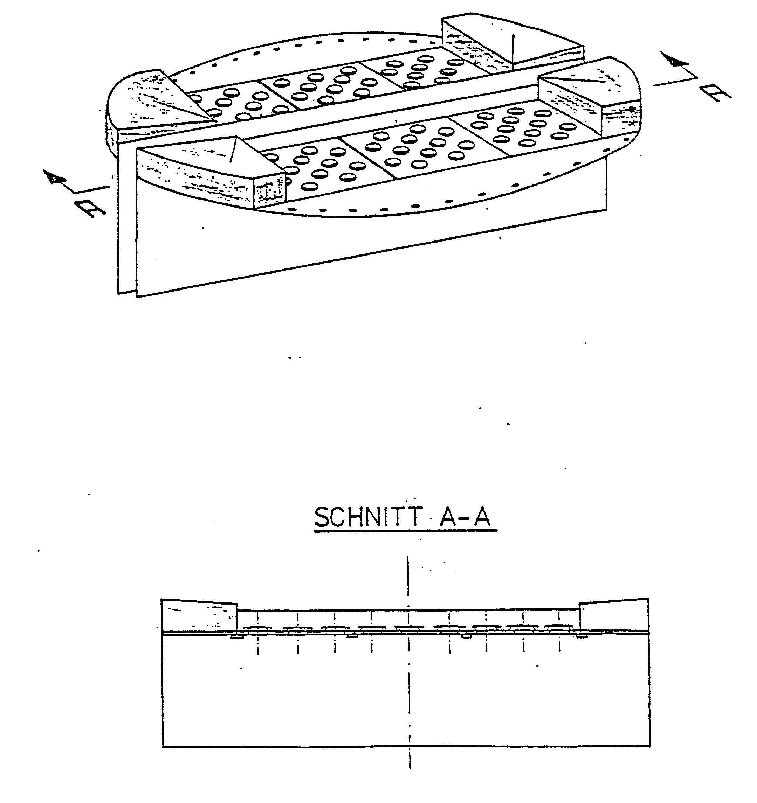

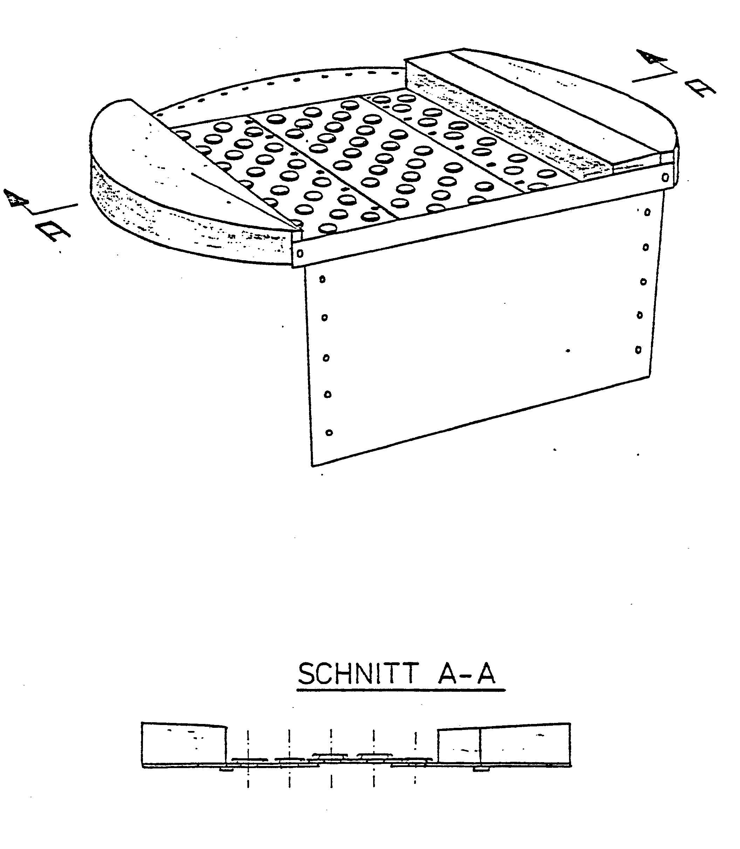

In den Figuren 3, 4 und 5 sind Böden dargestellt, auf denen sich die erfindungsgemäßen Einbauten befinden. In den Figuren sind es segmentartige Einbauten, welche Teile der Böden abdecken und eine Höhe besitzen, die oberhalb des Flüssigkeitsniveaus auf dem Boden liegt und etwa gleich der Höhe des Ablaufwehrs oder etwas höher ist. Die Einbauten können beidseitig die gleiche Fläche oder ungleiche Flächen abdecken. Die Einbauten sind bevorzugt etwas von außen nach innen geneigt. Durch die erfindungsgemäßen Einbauten wird erreicht, daß sich auf den Böden eine optimale Flüssigkeitsbelastung (1/min.cm Wehrlänge) und eine optimale Dampfbelastung in m/sec. (bezogen auf Lochfläche) einstellt.

Die Segmente werden vorzugsweise beidseitig so angebracht, daß die aktive Fläche auf beiden Seiten symetrisch verändert wird.

Die Segmente können in Kolonnen nach Bedarf eingebaut und ausgebaut werden. Böden können jedoch auch vom Hersteller bereits mit Segmenten ausgerüstet sein.

Die Größe der Segmente richtet sich nach der Belastung, der gewünschten Flexibilität, dem

2

# 0 090 230

Kolonnentyp, der Art der Böden in der Kolonne. Von Bedeutung sind die Segmente insbesondere für Waschböden in atmosphärischen und Vakuum-Destillationskolonnen.

Durch übliche Berechnung mit EDV-Anlagen (z. B. Boden zu Boden-Berechnungen, Sektion zu Sektion-Berechnungen inklusive Boden-hydraulische Berechnungen), kann die Größe der Segmente ermittelt werden, um optimalen Austausch und damit den geringsten Energieverbrauch zu erzielen.

In Anpassung an die Belastung können die Bodenflächen beliebig durch Einbauten vergrößert und verkleinert werden, wobei die Einbauten aus einem oder mehreren Teilen bestehen können, dies kann direkt durch vorhandene Mannlöcher erfolgen.

Durch die Segmente werden die bisherigen Nachteile des Standes der Technik, nämlich zu hohe Energiekosten, Schwierigkeiten beim Anfahren der Kolonne, schlechtes Teilbereichsverhalten, schlechte Produkttrennung und Produktzersetzung, begleitet von Produktverlust und Verschmutzung der Böden, vermieden.

Die Segmente führen zu überlegenen Ergebnissen, verglichen mit der ausschließlichen Verwendung der « Blanking-Methode », die auf einer Verkleinerung der Böden parallel zum Abflußwehr beruht. Die erfindungsgemäße Vorrichtung kann jedoch mit der « Blanking-Methode » kombiniert werden und kann dann ebenfalls zu einer überraschenden Verbesserung und Erhöhung der Wirtschaftlichkeit führen. Die Segmente können sowohl in einflutigen als auch mehrflutigen Böden angebracht sein.

Die Erfindung soll an folgendem Beispiel näher erläutert werden :

### Destillations-Kolonnendaten

| Typ | atmosphärische Rohölkolonne |
|---|---|
| Anzahl der Waschböden | 6 |
| Bodentyp | einflutige V1-Tellerböden |
| Mehrverdampfung | 6 Vol. % (Überlappung 55 °C) |
| Flüssigkeitsbelastung | 0,5 1/min.cm Wehrlänge |
| Dampfbelastung | 2 m/sec. |
| Verhalten | Kanalbildung (Durchregnen) |
| Fluten | nur 25 % |
| Druckverlust | 4 m bar/Boden |

Der günstigste Bereich bei Destillationskolonnenböden liegt bekanntlich bei einer Flutung von 40-90 %.

Unterhalb 40 % kann bereits Kanalbildung auftreten. Oberhalb 100 % steigt die Flüssigkeit auf den Böden an.

Symmetrisches Abdecken der stagnanten Zonen mit den erfindungsgemäßen Einbauten, wobei 60 % der Bodenfläche als aktive Austauschfläche erhalten bleiben, führt zu einer Flutung von über 40 %, wobei eine Energieersparnis von 10 % erzielt wird.

**Patentansprüche**

1. Vorrichtung zur Verbesserung der Destillation und Rektifikation in Destillationskolonnen, welche Böden mit stagnanten Zonen enthalten, bestehend aus Einbauten im Bereich der stagnanten Zonen, dadurch gekennzeichnet, daß die Einbauten aus Segmenten bestehen, welche die stagnanten Zonen in Anpassung an die Belastung abdecken.

2. Vorrichtung nach Anspruch 1, dadurch gekennzeichnet, daß die Einbautenm als Segmente ausgebildet sind, die eine solche Höhe besitzen, daß ihre obere Fläche oberhalb des Flüssigkeitsniveaus auf dem Destillationsboden liegt.

3. Vorrichtung nach den Ansprüchen 1 und 2, dadurch gekennzeichnet, daß die Fläche von Waschböden durch die Einbauten so verändert, daß keine stagnanten Zonen auftreten.

4. Vorrichtung nach den Ansprüchen 1 bis 3, dadurch gekennzeichnet, daß die Einbauten aus einem oder mehreren Teileinbauten bzw. Teilsegmenten bestehen.

5. Vorrichtung nach den Ansprüchen 1-4, dadurch gekennzeichnet, daß die Einbauten eine leichte Neigung von außen nach innen besitzen.

6. Vorrichtung nach den Ansprüchen 1-5, dadurch gekennzeichnet, daß die Fläche der Destillationsböden durch auf beiden Seiten gleichgroße Einbauten verändert wird.

7. Vorrichtung nach den Ansprüchen 1-6, dadurch gekennzeichnet, daß die Größe der Einbauten, angepaßt an die Belastung rechnerisch ermittelt ist.

8. Vorrichtung nach den Ansprüchen 1-7, dadurch gekennzeichnet, daß die Einbauten auf den Böden einer Destillationskolonne teilweise parallel zur Fließrichtung und teilweise senkrecht zur Fließrichtung (sog. Blanking-Methode) angebracht sind.

**Claims**

1. Device to improve the fractionation and rectification in distillation columns which contain

3

distillation trays with stagnant zones, consisting of installations in the region of the stagnant zones, characterized in that the installations consist of segments which cover the stagnant zones depending on the distillation load.

2. Device according to claim 1, characterized in that the installations are designed as segments, which possess such a height, that their upper surface is situated above the level of the liquid on the distillation tray.

3. Device according to claims 1 and 2, characterized in that the area of wash trays is adapted by installations in such a way, that the stagnant zones are eliminated.

4. Device according to claims 1-3, characterized in that the installations consist of one or several installation parts resp. segment parts.

5. Device according to claims 1-4, characterized in that the installations possess an inclination from outside to inside.

6. Device according to claims 1-5, characterized in that the area of the distillation trays is altered at both sides by installations of the same size.

7. Device according to claims 1-6, characterized in that the size of the installations is accomodated to the distillation load by mathematical methods.

8. Device according to claims 1-7, characterized in that distillation trays are employed in distillation columns which possess installations parallel to the flow direction and trays with installations according to the blanking method perpendicular to the flow direction.

## Revendications

1. Appareil pour perfectionner la distillation et la rectification dans des colonnes à distiller, qui contiennent des plateaux à zones stagnantes consistant en éléments rapportés dans la région des zones stagnantes, caractérisé en ce que des éléments rapportés consistent en segments qui recouvrent les zones stagnantes en adaptation à la charge.

2. Appareil selon la revendication 1, caractérisé en ce que les éléments rapportés sont réalisés sous forme de segments qui possèdent une hauteur telle que leur face supérieure est située au-dessus du niveau du liquide sur le plateau de distillation.

3. Appareil selon les revendications 1 et 2, caractérisé en ce que la surface de plateaux de lavage est modifiée par des éléments rapportés, de manière qu'il ne se forme pas de zones stagnantes.

4. Appareil selon les revendications 1 à 3, caractérisé en ce que les éléments rapportés consistent en un ou plusieurs éléments ou segments partiels.

5. Appareil selon les revendications 1 à 4, caractérisé en ce que les éléments rapportés possèdent une légère inclinaison de l'extérieur vers l'intérieur.

6. Appareil selon les revendications 1 à 5, caractérisé en ce que la surface des plateaux de distillation est modifiée sur les deux faces par des éléments rapportés de même grandeur.

7. Appareil selon les revendications 1 à 6, caractérisé en ce que la grandeur des éléments rapportés, adaptée à la charge, est déterminée par calcul.

8. Appareil selon les revendications 1 à 7, caractérisé en ce que les éléments rapportés sont disposés sur les plateaux d'une colonne à distiller partiellement parallèles au sens d'écoulement et partiellement perpendiculaires au sens d'écoulement (méthode dite « blanking »).

**0 090 230**

STAGNANTE ZONEN

SCHNITT A-A

1

0 090 230

WASCHZONE

DESTILLAT

EINSATZ

WASSERDAMPF

RÜCKSTAND

SCHNITT A-A

## SCHNITT A-A

SCHNITT A-A

ABDECKUNG NACH DER
BLANKING METHODE

SCHNITT A-A

6